# EUROPEAN PATENT APPLICATION

(11) **EP 4 614 378 A1**
(43) Date of publication of application: **10.09.2025**
(21) Application number: 25161942.5
(22) Date of filing: 05.03.2025
(51) Int. Cl.: G06F 21/64, H04L 9/32, H04N 7/18, H04N 21/8352

(54) **METHODS AND SYSTEMS OF AUTHENTICATING VIDEO SURVEILLANCE DATA**

(30) Priority: 06.03.2024 GB 202403249
(71) Applicant: Milestone Systems A/S, 2605 Brøndby (DK)
(72) Inventor: RASMUSSEN, John Hertel, 2605 Brøndby (DK); HENDRICKS, Joshua James, 2605 Brøndby (DK)
(74) Representative: Canon Europe Limited

(57) **Abstract**

A method 300 of authenticating a video surveillance data package from a video management system (VMS) of a video surveillance system, the method comprising the steps of:
a) receiving, by a computing device, a video surveillance data package generated by the video management system S310;
b) calculating, by the computing device, a first hash value S320 for the received video surveillance data package;
c) comparing S330 the first hash value of the received video surveillance data package to a second hash value provided by a secure repository, the secure repository comprising a video surveillance data package received from the video management system prior to step a);
d) validating S340 the first digital signature of the received video surveillance data package; and
e) determining that the video surveillance data package received by the computing device is authentic S350 based on both step c) and step d).

## Description

### FIELD

The present disclosure relates to methods and systems of authenticating a video surveillance data package from a video management system of a video surveillance system. In particular but not exclusively, the disclosure relates to methods and systems of increasing trust in a digital chain of custody by authenticating a video surveillance data package from a video management system.

### BACKGROUND

Digital files, both metadata and media data, such as video data, can be readily manipulated by a bad actor or be inaccurate by improper configuration or maintenance of the underlying system or device which creates the data. For example, a digital video recording may have incorrect time and date stamps or metadata because the on-site Video Management System (VMS) of the surveillance system has been configured with the incorrect time or date, this is especially prevalent if there is no connection to an external network to validate time or date setting of the VMS.

Additionally, since digital files can be supplied from many sources and can be readily copied and manipulated, there may be a low level of trust in digital files and the data contained within. While it is possible to confirm that a digital file is identical to a previous digital file, for example, through comparing hash values of both files, the authenticity of the previous digital file as being the original or authentic digital file is not considered. The source of the digital file and the source of the hash value needs to be in a trusted position with the recipient to ensure the authenticity.

A computer user may receive a digital file, for example by downloading or a memory stick, from a first source which may or may not be trusted. The computer will be able to generate a hash value for the received digital file which they can compare with a hash value from the first source to determine it is the same file, but the first source's file may not be an authentic version of the file.

In some instances where the authenticity of a digital file and it's contents is paramount, such as where the digital file's contents is important to make informed decisions, such as evidence in legal proceedings, there needs to be a high level of trust that the digital file or collection of digital files, such as media database files, is an authentic copy of the original and that the contents are authentic. In the context of legal proceedings this concept is known as the chain of custody (COC) which increases trust and credibility in the authenticity of a piece of evidence. COC is essentially the logical sequence that records the sequence of custody, control, transfer, analysis and disposition of physical or digital evidence, which assists in increasing the credibility that the piece of evidence has not been faked, tampered with or manipulated in some way. While the chain of custody is most prevalent in legal proceedings, it is also equally relevant to other areas, for example, drug testing within sporting events or supply chain management.

Digital evidence, for example digital video, has become increasingly common over the years because of the increased number of sources and additional benefits it may provide. However, the level of trust for such evidence can be low because of its digital nature, i.e. readily copyable and manipulatable.

### SUMMARY OF INVENTION

The present disclosure has been devised to address one or more of the foregoing problems.

According to a first aspect of the present invention there is provided a method of authenticating a video surveillance data package as set out in claim 1.

The present invention provides a means to determine that a received video surveillance data package is authentic. The present invention increases trust that a received file is authentic by providing a source, i.e. the secure repository, which comprises a version of the original video surveillance data package received directly from the video management system (VMS) upon generation of the video surveillance data package. The transmission of the video surveillance data package from the video management system to the secure repository happens in a secure manner, for example by using a secure server of the video management system. VMS users are prevented from interacting or influencing the process of generating and transmitting the video surveillance data package once the process has started. That is to say that there is a tightly controlled and monitored process of generating and uploading a video surveillance data package which limits opportunity for malicious or accidental manipulation. This increases the level of trust in the video surveillance data package.

Having a video surveillance data package stored in a secure repository allows for a comparison and validation at a later date to occur at a computing device remote to both the secure repository and the video management system of the surveillance system. The secure repository acts as an independent and trusted third party. The secure repository may be remote to the video management system and remote to the computing device.

The present invention is especially useful in the context of legal proceedings because it provides a method and system providing a digital chain-of-custody for surveillance video evidence. The secure repository is a trusted, independent and impartial source which can be used to check the authenticity of a received video surveillance data package since it holds an export data package, including or not including the media data, which was transmitted upon completion of the process of generating the video surveillance data package. It also documents necessary information and details about the export process, the source of export, the video management system performing the export and the VMS user doing the export. The data held is non-editable but can be shared with others and downloaded while keeping an original version of the video surveillance data package (also referred to as the video surveillance export package); this allows for digital forensics and analysis to be performed while maintaining an original copy for comparison later in court. Therefore, a way to document the chain-of-custody is provided by aspects of the invention.

The video surveillance data package stored in the secure repository may be considered an original version, either a complete version with media data or a partial version without media data, because it was received from the video management system upon completion of the data package generation process. The video management system may delete the generated video surveillance data package upon successful transmission to the secure repository. In some aspects, the video management system may delete the generated video surveillance data package upon successful transmission to the secure repository and successfully storing in the portable computer-readable storage medium.

The computing device may be considered a remote computing device in that it is physically remote to both the video management system and the secure repository. The computing device may be a computer within a court. The secure repository may be a server or servers in a data centre or centres. The video management system may be a server or servers located within or in close proximity to a surveillance area.

An encrypted media database may be provided. The media database may comprise the media data within the video surveillance data package. The media database may comprise at least one of audio data and video data, i.e. media data. The media database may comprise metadata. The video surveillance data package may comprise the encrypted media database. The media database may be encrypted during or upon completion of the generation of the video surveillance data package by the video management system. The encrypted media database may be encrypted using known means, such as a password or token, generated by the VMS or the VMS user.

A second digital signature applied to the media database may be provided. The second digital signature may be applied prior to encryption of the media database, the second digital signature is therefore an encrypted second digital signature. The second digital signature may be applied upon completion of the encryption of the media database.

A step of decrypting the encrypted media database may be provided. The step of decrypting the encrypted media database may also decrypt the encrypted second digital signature applied to the media database. The step may occur after the step of validating the first digital signature.

A step of validating the second digital signature of the encrypted media database may be provided. Preferably this step occurs after the step of decrypting the encrypted media database.

A step of validating the media database may be provided. The step of validating may comprise validating the second digital signature. The step of validating may comprise comparing information from the media database received with the received version of the video surveillance data package and information stored with the secure repository.

Preferably, the step of determining that the video surveillance data package received by the computing device is authentic may be based on both step c), step d) and the step of validating the second digital signature. That is to say that the determination of authenticity may be based on the step of comparing hash values, the step of validating the first digital signature and the step of validating the second digital signature. The step of validating the second digital signature may be combined with validating the media database.

An information data table may be provided. The video surveillance data package may comprise the information data table. The information data table may comprise at least one of video management system ID, IP address of video management system, VMS user detail, server information, export time information, upload time information, and surveillance device information.

A step of receiving an audit log may be provided. The computing device may receive the audit log from the secure repository. The computing device may request to view the audit log prior to the step of determining the authenticity.

The audit log may comprise information related to any type of interaction with the video surveillance data package stored in the secure repository. The audit log may comprise a record of at least one of the following: upload information pertaining to the upload of the video surveillance data package to the secure repository; download information pertaining to the downloads of the video surveillance data package from the secure repository, viewing information, and other interaction information.

A portable computer-readable storage medium, such as a hard disk drive (HDD), a solid state drive, an optical disk, magnetic tape, or similar, may be provided. The video surveillance data package generated by the video management system may be stored on the portable computer-readable storage medium. The step of receiving the video surveillance data package generated by the video management system may comprise the step of the computing device accessing the portable computer-readable storage medium.

The video management system may be configured to store the video surveillance data package onto the portable computer-readable storage medium upon completion of the process of generating the video surveillance data package. The generated video surveillance data package is also transmitted to the secure repository, in such cases both the version on the portable computer-readable storage medium and the secure repository are original versions.

The present invention allows for digital files stored on a portable computer-readable storage medium to be assessed for authenticity; this is especially advantageous as, in some cases, the size of the video surveillance data package containing media data, especially video data, may be significant which means that local storage or portable storage is preferable over cloud storage, such as the secure repository, or transferring files through a network, such as a wide area network like the internet. A further advantage in the context of legal proceedings is that a copy may be kept with each party, for example authorities such as the police or a criminal prosecution authority and defendants, as evidence which may be later compared to copy kept by a third party which is impartial.

A third hash value may be determined. The step of comparing the hash value may be further based on the third hash value.

The video management system may determine, i.e. calculate, a hash value for the generated video surveillance data package. The hash value determined by the video management system may be stored on a portable computer-readable storage medium, preferably together with the video surveillance data package. In such cases this may be known as the third hash value.

The hash value determined by the video management system may be received by and stored in the secure repository. This may be considered the second hash value and is preferable when there is a partial video surveillance data package. In some embodiments, such as those where the complete video surveillance data package is stored in the secure repository, the second hash value may be determined by the secure repository.

The step of determining that the video surveillance data package received by the computing device is authentic may comprise determining a level of confidence of the authenticity, i.e. an authenticity confidence level. The confidence level may be based on the various steps of comparison discussed, for example comparison of hash values, and verification, for example verification of digital signatures.

A registration process may be provided. The video management system may be registered to the secure repository. A plurality of video management systems may be registered to the secure repository. The registration process may need to be performed prior to the process of generating the video surveillance data package by the video management system.

The registration step may comprise validating the identity of the video management system. The registration step may comprise generating a single-use secure key. The single-use secure key provides a means for the video management system to be registered with the secure repository. The secure repository may store information about the video management system, for example the information may include at least some information identifying the video management system.

Additional identity checks and validations may be provided to ensure that the VMS entity is a true entity. Additional identity checks may be performed within a business context, for example, a credit checking agency or business intelligence agency. Another form of identity check may be through the use of digital certificates. The video management system may be operated by one business entity, i.e. associated with one business entity, the secure repository may be operated by a separate business, and the computing device may be operated by a further entity, for example a court or governmental agency.

The present registration process provides a mechanism to ensure that the VMS is associated to and has its identity recorded with the secure repository. The registration process allows the secure repository, or the entity in control of the secure repository, to confirm the identity of the VMS or VMS owner. Having a time between registration and upload can assist in increasing trust. Especially since The VMS operator has chosen to use the secure repository as a means to allow authentication which helps to increase trust.

The secure repository may receive the video surveillance data package from the video management system upon completion of the process of generating the video surveillance data package. The video surveillance data package transmitted to (i.e. received by) the secure repository may comprise at least an information data table and a first digital signature applied to the video surveillance data package. In such cases, the video surveillance data package may be considered a partial video surveillance data package. Preferably the video surveillance data package may comprise at least the information data table, the digital signature and media data. In such cases, it may be considered a complete video surveillance data package.

The secure repository may validate the video surveillance data package received from the video management system. The validation may be based on identity information stored in the secure repository. Preferably, the validation may be based on the registration information. The validation may be based on a comparison between the registration information and the information in the information data table.

The secure repository may generate a secure repository data package. The secure repository data package may comprise a copy of the video surveillance data package stored with the secure repository. The secure repository data package may comprise a repository information data table. The repository information data table may comprise at least one of information identifying the secure repository, registration information, prior validation information, time information such as upload start and finish time, and secure repository owner information. A digital signature may be applied to the secure repository data package. The digital signature applied to the secure repository may be referred to as a third digital signature.

The digital signature applied to the video surveillance data package may be referred to as a first digital signature, i.e. the first digital signature is the digital signature applied by the video management system to the video surveillance data package. The digital signature applied, by the video management system, to the media database may be referred to as a second digital signature. The digital signature applied to the secure repository data package may be referred to as a third digital signature, i.e. the third digital signature is the digital signature applied by the secure repository to the secure repository data package.

A step of validating the secure repository data package may be provided.

The video surveillance data package stored in the secure repository may comprise the media data from the video management system, i.e. the video surveillance data package stored in the secure repository may be a complete version of the original video surveillance data package. In some embodiments, the computing device may request the copy of the video surveillance data package from the secure repository. A step of transmitting, by the secure repository to the computing device, the copy of the video surveillance data package generated by the video management system may be provided. The step of receiving the video surveillance data package may comprise the step of transmitting.

A second aspect of the present invention is provided by a system for authenticating a surveillance data package as set out in claim 9.

The second aspect of the present invention may provide the same advantages as the first aspect. Preferable or optional features of the second aspect of the present invention are presented in relation to the first aspect of the present invention. That is to say that a skilled person can derive features of a system to the method of the first aspect.

A third aspect of the present invention is provided by a method of generating a video surveillance data package as set out in claim 10.

The invention provides a means to generate a video surveillance data package which is capable of being authenticated later. The process provides a means to authenticate the video surveillance data package through multiple ways which increases the trust in the authentication. Furthermore, the process automatically gathers information which is especially relevant to validating the authenticity thus increasing trust. The provision of an original copy of the video surveillance data package to a secure repository, e.g. a secure trusted third party, increases trust since the secure repository is an independent and impartial party.

The process of generating the video surveillance package and uploading to the secure repository is controlled and monitored to limit opportunity for malicious or accidental manipulation. This increases the level of trust in the video surveillance data package.

A fourth aspect of the present invention may be provided by a system to perform the method of the third aspect.

A secure export package server may be provided for providing an environment for generating the video surveillance data package. The secure export package server may provide a secure environment to generate the video surveillance data package so that users of the video management system cannot interfere. The secure export package server may provide a secure means to transmit the video surveillance data package to the secure repository. The video surveillance data package is generated as a protected resource in the secure export package generation server.

An authorisation server may be provided. The authorisation server may be configured to operate on an authorisation framework with the secure export package server. The authorisation server controls access to the protected resource, i.e. the generated video surveillance data package. The authorisation server may provide access to the secure repository in the sense that it authorises the transmission of the protected resource to the secure repository.

A VMS user may define the media recording stored in the video management system to be exported. The VMS user may use a software client provided in the video management system to define the media recordings to be exported. The defined media recordings for example will be communicated to the secure export package generation server. The VMS user will not be able to interfere with the generation of the data package as the software client will not be provided with authorisation from the authorisation server.

The secure repository may validate the received video surveillance data package. The validation process may be based on registration information, i.e. information the secure repository holds on the video management system, and information within the information data table of the video surveillance data package.

The secure repository may be realised by one or more servers. The secure repository may operate with multiple tenants, each tenant may be an individual entity, e.g. business. Each tenant may be associated to one or more video management systems. Each video management system may be for a different area of surveillance, e.g. a different physical premises.

The original video recordings recorded by the video management system may be validated prior to generating the video surveillance data package and/or prior to being transmitted to the secure repository and/or prior to storing on a portable computer-readable storage medium. The step of validating the video recordings, i.e. validating the video data, may occur prior to generation of the video surveillance data package. If this validation step fails, the video surveillance data package does not occur, i.e. is not generated, as it may indicate that the video data has been tampered with. The validation may be based on a digital signature being applied to the video recordings prior to the step of validating, preferably the digital signature is applied to the video recordings upon receipt of the video from the video camera.

A client running on the computing device may stream media data from the secure repository, the streaming media data is contained in the video surveillance data package.

The video surveillance data package may comprise metadata. The metadata may be generated by video analytics. The video analytics may be performed by the video management system and/or on-board the camera.

The preferable or optional features referred to above in relation to one or more aspects of the present invention may be optional or preferable features for one or more other aspects of the present invention. That is to say that an optional or preferable feature related to one aspect may be an optional feature for a different aspect.

Preferable and optional features of any aspects of the present invention will be apparent to the skilled person based on the disclosure in this patent specification.

Different aspects may be combined together to form a single method or system. For example, the first aspect and the third aspect may be combined together to form a single method which provides for the generation/creation of the video surveillance data package and the authentication of said video surveillance data package.

A further aspect of the invention may be provided by a method comprising a process of generating a video surveillance data package according to the third aspect, and a process of authenticating a video surveillance data package according to the first aspect, wherein the process of generating the video surveillance data package occurs prior to the process of authenticating the receiving video surveillance data package.

While some advantages are discussed in reference to one aspect, one or more of these may be applicable to other aspects. For example, advantages of the first aspect may be relevant to the third aspect. Other advantages will be apparent to the person skilled in the art.

### BRIEF DESCRIPTION OF THE DRAWINGS

For a better understanding of the present invention, and to show more clearly how it may be carried into effect, reference will now be made by way of example to the accompanying drawings. Other features and advantages of the present invention will become apparent from the following description of non-limiting exemplary embodiments, with reference to the appended drawings, in which:
- **Figure 1** schematically illustrates a system according to an embodiment of the present invention;
- **Figure 2** is a schematic block diagram of a method according to an embodiment of the present invention;
- **Figure 3** is a schematic block diagram of a method according to an embodiment of the present invention;
- **Figure 4** is a conceptual schematic representation of a video surveillance data package according to an embodiment of the present invention; and
- **Figures 5a** **and** **5b** are conceptual schematic representations of a secure repository data package according to an embodiment of the present invention.

### DETAILED DESCRIPTION OF EMBODIMENTS OF THE DISCLOSURE

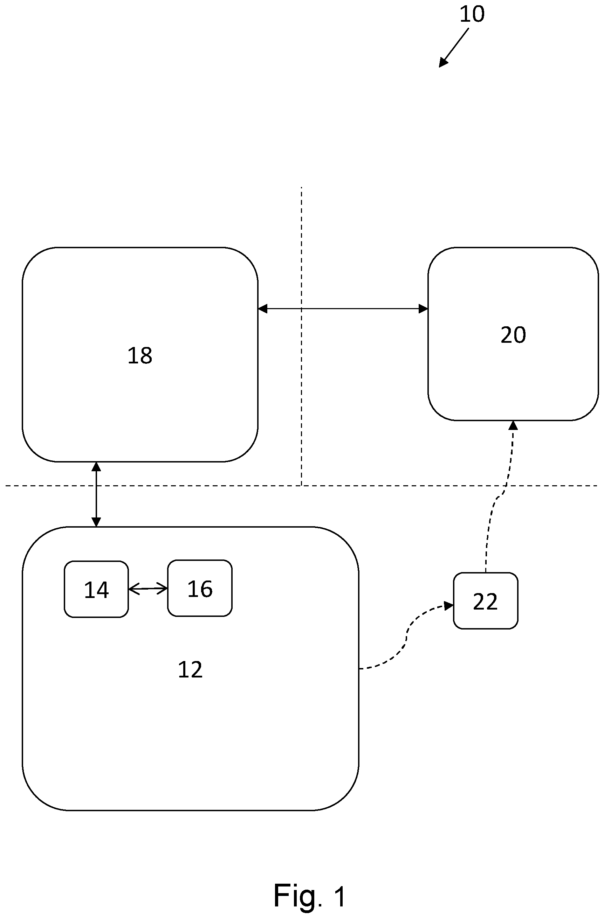

Referring firstly to Fig. 1, an embodiment of a system for authenticating a video surveillance data package is generally indicated at 10. The solid black arrows between entities indicate communication connections which can be established and disconnected as and when needed.

A video management system (VMS) 12 is provided. The video management system 12 is part of a surveillance system (not shown). The surveillance system will typically comprise one or more video cameras (not shown) of one or multiple types (e.g. stationary cameras, movable cameras etc) located in a surveillance area (for example a retail establishment). The one or more video cameras are communicatively connected to the video management system 12. The video management system 12 receives a video stream containing video data from the one or more video cameras. The received video stream may be stored in a media repository. The video management system may also send control instructions to the one or more video cameras.

A user interface for the VMS 12 is provided and is configured to provide a graphical user interface (GUI) including a user interface window which enables a user of the VMS 12 to view live video stream and stored video stream. A suitable display may be connected to the VMS 12 to display the GUI.

The VMS 12 may be embodied as one or more software program(s) comprising respective computer executable instructions configured for execution on a suitable data processing system, e.g. by one or more server computers. The data processing system implementing the VMS is either arranged remote from or within the same site as the one or more video cameras.

Various types of processing, such as video analytics, may be performed on the video stream by the VMS, or a dedicated server within the VMS 12. For example, object detection, object recognition, motion detection, object tracking etc. The processing can be performed on the live video stream received, the video stream retrieved from the media repository, or a video stream buffered in a memory within the VMS 12. The video analytics may be performed by the VMS 12 in addition to any analytics performed onboard the video cameras. In the case where the video cameras do not comprise on-board analytics, the processing may be performed by VMS 12 or a dedicated server.

The VMS 12 may comprise a secure environment. The secure environment is suitable for generating a surveillance video data package. The secure environment may prevent a VMS operator from interfering with the process of generating a surveillance video data package once it has started. The secure environment may also prevent interfering in the process of transmitting a surveillance video data package. The secure environment may be embodied through one or more software program modules executed by suitable data processing systems, e.g. by one or more servers. The secure environment comprises a secure export package server 14 and an authorisation server 16. A protected resource, for example the generated surveillance data package, is generated and temporarily stored in the secure export package server 14 until successful transmission to the secure repository.

When the VMS 12 is initially set up and commissioned, various information about the VMS and surveillance system will be gathered and stored within a memory. This VMS information may include at least SLC# and SITE ID.

A secure repository 18, also referred to as a secure remote repository, is provided. The secure repository is located remote to the VMS 12. The secure repository 18 comprises storage means, i.e. computer-readable medium, such as hard disks, tape storage etc.

The secure repository 18 may be embodied as one or more software program(s) comprising respective computer executable instructions configured for execution on a suitable data processing system, e.g. by one or more server computers. The secure repository 18 may comprise a plurality of tenants, each tenant being associated with a separate one or more VMSs operated by an entity.

The secure repository 18 is selectively connectable to the VMS 12 through communication interfaces.

A computing device 20 is provided. The computing device 20 is remote to the secure repository and also remote to the VMS 12. The computing device 20 may be a personal computer, such as a laptop or desktop, it may be a smart device, such as a tablet, or similar type of computer. The computing device 20 is selectively connectable to the secure repository 18 through communication interfaces.

The computing device 20 may be embodied as one or more software program(s) comprising respective computer executable instructions configured for execution on a suitable data processing device, such as a processor.

A video client software program may be provided on the computing device 20. The video client program provides the ability to view recorded video data from the cloud.

In Fig. 1 the horizontal and vertical dashed lines indicate remoteness between the entities. It should be noted that the remoteness of the VMS, secure repository and computing device is not just a geographical or physical remoteness but may also be considered to refer to a legal or control remoteness. That is to say that each may be under the control of separate individual legal entities (such as companies, governmental authorities or bodies etc). For example, the entity with the VMS may be a commercial business, the entity with the secure repository may be a security company, and the entity with the computing device may be a court or governmental authority.

The VMS 12 may be associated with a first entity, for example, a business. The secure repository 18 may be associated with a second entity, for example a second business, the second business independent from the first entity. The computing device 20 may be associated with a third entity, for example, a government institution.

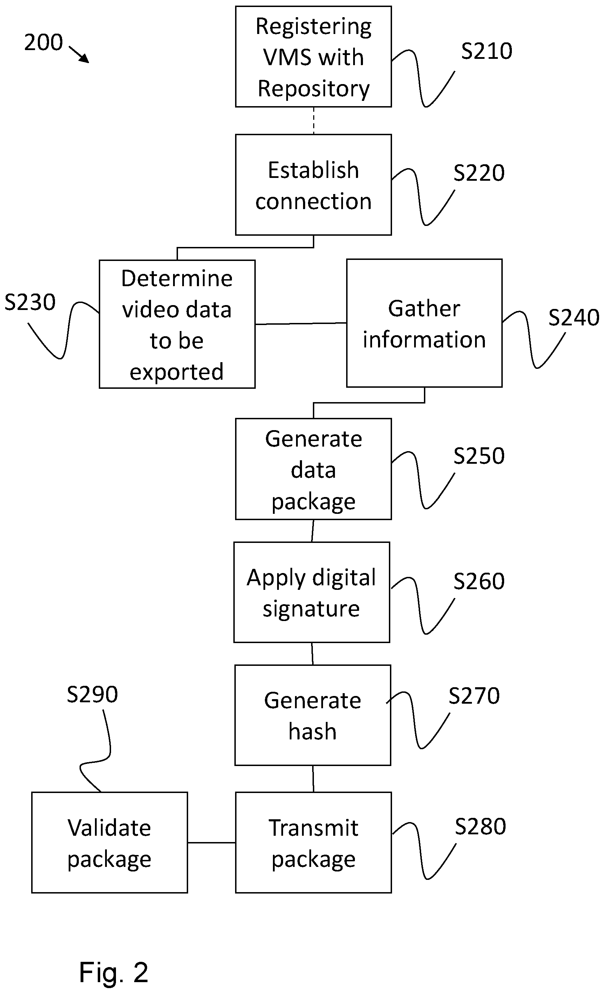

Referring to Fig. 2, a method of generating a video surveillance data package by a video management system 12 which is capable of being authenticated later by a computing device 20 is generally indicated at 200.

It is preferable to associate the VMS 12 with the secure repository 18 prior to generating a video surveillance data package. For example, associating the VMS 12 to the secure repository before generating a video data package for evidence for a governmental institution such as a court.

In the current embodiment, the association is provided by a step of registering S210 the VMS 12 with the secure repository 18.

In some embodiments, the owner of the secure repository 18 will need to verify the identity of the owner of the VMS. This may be done through a verification process external to and independent from the system of the present invention, i.e. external to the VMS 12, the secure repository 18 and the computing device 20. One verification process, in a business context, may be the use of a credit check agency or similar.

During the step of registering S210, the VMS 12 will be registered to a tenant on the secure repository 18. This may be achieved through a known process, for example an exchange of a one-time-use key between the operator of the VMS and the admin of the secure repository. The tenant may be an account for the entity who owns the VMS. Having one tenant allows for a plurality of VMSs to be registered.

The VMS 12 and the secure repository 18 establish a connection through a communication interface during the registration process. During the step of registration, the secure repository 18 and VMS 12 will communicate and exchange information. Some of the information exchanged will include identity data, for example, VMS identity data based on the VMS. The secure repository 18 will automatically store VMS identity data. Some of the VMS identity data may also be provided by the VMS operator and stored in association with the tenant associated with the VMS. The VMS identity data will allow the secure repository 18 to validate information from a video surveillance data package generated by the associated VMS 12.

After registration has been completed successfully, the VMS operator may upload to the secure repository to securely store a video surveillance data package for later use. In Fig. 2 the dashed vertical line between S210 and S220 indicates that a constant connection between the VMS 12 and the secure repository is not needed and that some time may have passed between registration and upload of a video data package. However, it is preferable that a connection is maintained between the VMS and the secure repository.

In the current embodiment, a video surveillance data package needs to be generated which can be authenticated at a later date. For example, a crime has happened at the sight of the surveillance area and the VMS operator needs to supply the video recordings as evidence.

Prior to generating the video surveillance data package for upload to the secure repository, the VMS in step S220, will confirm that a connection with the secure repository 18 is established.

The VMS operator determines the video recordings to be exported in the data package. In Step S230, the VMS operator reviews one or more video streams containing video data and determines the extent of the video data to be exported. For example, the VMS operator determines that only a 15 minute period of a single video stream is relevant since it contains the crime and the suspect, they go on to define a time range to encompass the 15 minute period which will be used in the export process to take a copy of the original media data in the relevant media database segments of the original recordings. Taking a copy of the recordings in such a fashion maintains the original information and digital signatures made when the media was recorded. In other embodiments, multiple time ranges for multiple video streams may be relevant, as such the export may define time ranges for multiple video streams.

The information defining the video recordings will be used by the secure export package server **14** in the video surveillance data package generation process.

Steps 220 and 230 may happen concurrently or consecutively.

In Step 240, the VMS 12 will gather the information data related to the video stream(s), for example, video stream metadata such as recording time, video analytics metadata, etc, and information data related to the source of the video stream(s), i.e. video camera(s), for example video camera metadata such as location name etc. The information data also includes identity data related to the identity of the VMS 12, for example, SLC#, VMS ID, public IP, VMS operator ID, VMS OWNER ID, LOCAL IP, HOST NAME, DOMAIN, WORKGROUP, etc. This information will be used by the secure export package server 14.

Steps S230 and S240 may happen concurrently or consecutively.

In step S250, the secure export package server 14 generates a data package, i.e. the video surveillance data package, for export based on the information data and the data defining the media recordings. The export package is generated as a protected resource in a secure environment meaning that the VMS operator, apart from defining what video recordings are to be exported, cannot interfere with the generation. The resultant video surveillance data package will comprise media data, such as video data, and an information data table containing information data related to the video stream, information data related to the video source and information data related to the identity of the VMS. In some embodiments, the information data table may be multiple information data tables. The media data may be provided in a media database, as is known in the art.

A VMS user may also supply a password used to encrypt the video data or the media database.

During or after the export package generation, a step of generating and applying a digital signature S260, is performed. The digital signature may be generated and applied as is known in the art, for example generating a hash value of the file and encrypting the hash value using a private key of the VMS. Applying a digital signature means storing and/or sending the relevant digital signature with the relevant information. The counterpart public key of the VMS associated with the private key of the VMS being transmitted to the secure repository 18 during registration or during another point, such as when the data package is transmitted.

A digital signature is generated based on the media database (or the media database encrypted by the password). This may be referred to as the media database digital signature or variations thereof or the second digital signature.

The second digital signature is applied to the media database (or the encrypted media database).

A digital signature is generated based on the video surveillance data package. This digital signature may be referred to as the first digital signature as well as the data package digital signature or variations thereof. The first digital signature is applied to the video surveillance data package.

In step S270, a hash value is calculated based on the video surveillance data package. This may be referred to as the second hash value. The hash value may be calculated using algorithms known in the art such as those in the SHA-2 family. Preferably the hash value will be based on the video surveillance data package and the digital signatures which have been applied.

The calculated hash value is stored and associated with the video surveillance data package in the secure export package server 14. The hash value being a further protected resource.

In the current embodiment, step S280 comprises transmitting the video surveillance data package and the associated hash value from the secure export package server **14** to the secure repository 18. The video surveillance data package transmitted is a video surveillance data package comprising the media data, the information data table, and the digital signatures.

However, in other embodiments, the video surveillance data package transmitted comprises the information data table and digital signatures. That is to say that it does not include media data, i.e. it is a partial video surveillance data package. This embodiment minimises the size of the video surveillance data package transmitted to the secure repository as the media data will tend to be the majority of the size of the package. In such embodiments, a further video surveillance data package is recorded on a portable computer-readable storage device, for example an optical disk, hard drive, solid state drive or similar, which comprises the media data, information data table and digital signature, i.e. a complete video surveillance data package. The portable computer-readable storage medium being indicated at 22 in Fig. 1.

In some embodiments, a complete video surveillance data package may be transmitted to the secure repository and a complete video surveillance data package is stored on a portable computer-readable storage medium.

Information data associated with the transmission of the video surveillance data package is also stored in association with the video surveillance data package. For example, upload start time, upload durations etc.

Upon receipt the secure repository 18 will store the video surveillance data package. The video surveillance data package is stored in association with the tenant associated with the VMS.

In step 290, the secure repository 18 will validate the video surveillance data package. The process of validating may comprise one or more validation processes. The secure repository 18 may compare VMS identity information in the information data table of the video surveillance data package with VMS registration information, i.e. VMS identity information, stored in the secure repository during the registration process; for example, IP address matching, ID matching. The secure repository may calculate a hash value using the same hash algorithm and compare it to the received hash value. The secure repository 18 may also authenticate the first digital signature and or second digital signature. The results of the validations and the validation steps taken are stored by the secure repository in association with the video surveillance data package.

The video surveillance data package stored in the secure repository 18 is stored in a secure way. However, the secure repository provides monitored and controlled access in a limited way to the video surveillance data package. For example, an entity may be granted limited access such as the ability to view and download a copy, but not to delete or otherwise alter the copy of the video surveillance data package stored in the secure repository. Access to the video surveillance packages may be controlled, for example, by a tenant admin granting limited access rights to an entity to view or download a copy of the video surveillance data package stored in association with the tenant. This may be achieved by known means, for example, a single use token or similar may be provided to an entity to allow them to view or download a copy of the video surveillance data package.

An audit log for the video surveillance data package is generated and recorded. Any type of interaction will be recorded within the audit log, preferably interactions which may be of interest in determining the authenticity of the video evidence. For example, it will record number of viewings, the identity of the viewer, information associated with the viewer etc. The audit log is stored in association with the video surveillance data package.

The secure repository may also generate its own data package, i.e. a secure repository data package also referred to as a repository data package. The repository data package comprises the video surveillance data package received from the VMS, a repository information data table, uploading information such as time of upload and completion of upload, VMS registration data, validation information and a secure repository digital signature.

The repository information data table comprises information on the owner of the secure repository, address of the repository (physical and/or network), contact information, etc. The repository information data table may comprise information on the tenant.

The VMS registration data may include the VMS identity information stored in the secure repository during the registration process. The VMS registration data may also include information such as when the VMS was registered with the secure repository.

The validation information will provide information on the validation checks performed by the secure repository and the results of the validations.

The repository digital signature, also referred to as the third digital signature, will be generated and applied in the same way as the digital signatures discussed earlier, i.e. calculating a hash value for the repository data package and encrypting the hash value using a private key of the secure repository. The counterpart public key of the secure repository associated with the private key is transmitted as needed to other computing devices as needed, preferably when transmitting the repository data package.

The repository data package may be generated upon request from an entity that wishes to authenticate the evidence, i.e. the video data. Alternatively, it may be pregenerated and stored in the secure repository.

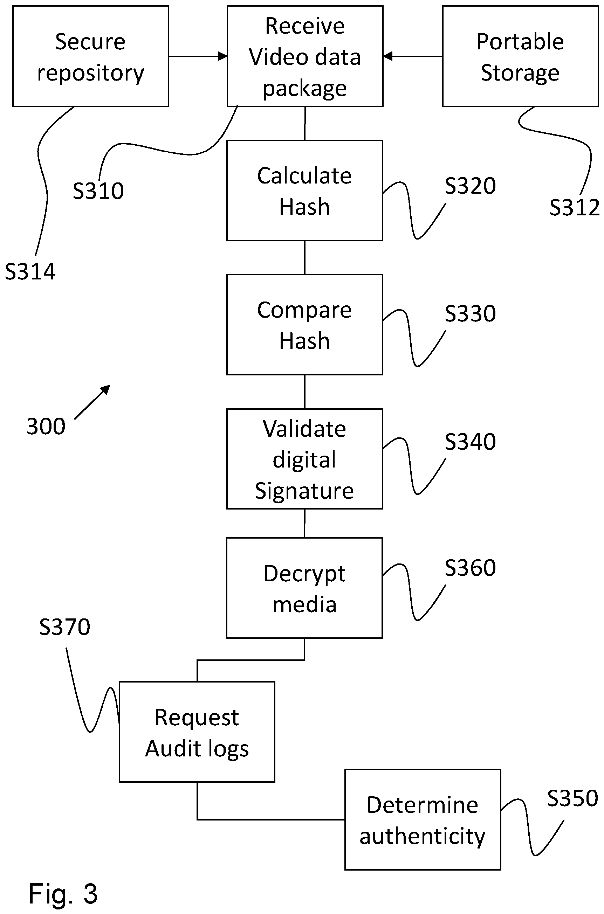

Referring to Fig. 3, a method of authenticating the video surveillance data package is generally indicated at 300. The method authenticates the authenticity of the video data.

The computing device 20 establishes a connection with the secure repository 18. This may be achieved through known means. In some embodiments, the computing device 20 is running a computer program which is a client to the secure repository 18 and provides functionality to view media data as well as authenticate the received data package.

In step S310, a data package comprising a video surveillance data package with the media data, i.e. a video surveillance data package, is received by the computing device 20, for example a court computer.

In a first embodiment, the data package with video data is received from accessing a video surveillance data package comprising media data stored on the portable computer-readable storage medium S312.

In a second embodiment, the data package with media data is received from the secure repository S314. This may be the video surveillance data package or the repository data package, with either data package comprising the video surveillance data package with media data. As such reference to the repository data package should be understood to cover both instances.

Both the first and second embodiments may be combined so that the computing device receives a data package from each of the computer-readable storage medium and the secure repository. Note that Fig. 3 shows both S312 and S314, however, the computing device only needs to receive one complete video surveillance data package. The embodiment below is described in reference to the case where only one complete video surveillance data package is received by one of the first embodiment or the second embodiment, i.e. one of S312 or S314. The skilled person will understand that the same or similar steps are performed in an embodiment which combines both S312 and S314.

In step S320, the computing device 20 calculates a first hash value for the received data package comprising media data. The first hash value being calculated based on a hashing algorithm, specifically the same hashing algorithm as used by the VMS.

In the first embodiment, this will involve hashing the video surveillance data package. In the second embodiment, the computing device 20 will calculate the hash for the video surveillance data package within the repository data package.

The first hash value determined for the received data package is compared S330 to a hash value provided by the secure repository 18. This may be a stored hash value determined by the VMS upon generating the video surveillance data package. In one example, this is the second hash value calculated in step S170. In another example, the hash value may be calculated by the secure repository.

In the current embodiment, the computing device 20 sends a request to the secure repository 18 to confirm whether the first hash value calculated by the computing device 20 for the received data package matches the second hash value stored in or calculated by the secure repository 18. The secure repository 18 compares the first hash value to the second hash value. The secure repository 18 will return the result of the comparison to the computing device 20.

In other embodiments, the computing device may request a copy of the stored hash value or the calculated hash value, i.e. the second hash value, to perform the comparison itself.

In the second embodiment a hash value for the received repository data package may be calculated as well by the computing device. This may ensure that there was no corruption or alteration of the received data package during transmission from the secure repository 18 to the computing device 20.

In step S340, the computing device 20 validates the digital signature applied to the received data package. In the first embodiment, the computing device 20 will validate the received video surveillance data package digital signature. In the second embodiment, the computing device 20 validates the digital signature applied to the repository data package and the digital signature applied to the video surveillance data package.

The computing device 20 may perform a signature verification algorithm known in the art. Typically the verification algorithm will process the digital signature using a public key to generate a first value, it will also calculate a hash value for the video surveillance data package (or use the value calculated in step S320) and compare it to the first value. Typically, if they both are equal, then the digital signature is valid else it is invalid.

The public key used for the digital signature of the video surveillance data package being a public key of the VMS 12, this may be provided with a VMS digital certificate. The digital certificate being provided with the video surveillance data package generated by the VMS. The digital certificate comprising the public key which corresponds to the private key used to encrypt the digital signature and certificate information as is known and common in the art.

The public key used for the digital signature of the repository data package being a public key of the secure repository. The public key of the secure repository being provided by a repository digital certificate. The digital certificate comprising the public key which corresponds to the private key used to encrypt the digital signature and certificate information as is known and common in the art. The repository digital certificate being provided with the repository data package.

In step S350, the computing device 20 makes a determination as to the authenticity of the received data package. That is to say it, determines whether the received video surveillance data package is an authentic copy of the original video surveillance data package generated by the VMS. The determination is based on the results of the hash comparison in S330 and the validation of the digital signature S340. For example, if the hash comparison shows that the hashes are the same and the validation of the digital signature shows that the signature is valid, the computing device will determine that the received video surveillance data package is authentic.

In both the first and second embodiments, the determination S350 is based on the received video surveillance data package. In the second embodiment, the validation of the repository digital signature and/or hash comparison for the repository data package provides further information which may assist in determining the authenticity of the video surveillance data package. It may also assist in ensuring that there has been no corruption or alterations made during transmission.

The determination in S350 will be displayed to a user of the computing device through a display of the computing device. In some embodiments, the computing device will display the results of S340 and S330.

A confidence level may be determined in some embodiments. The confidence level indicates the level of confidence that the received video surveillance data package is authentic. The confidence level may be based on steps S340 and S330.

Should the received video surveillance data package comprise an encrypted media database, as discussed above, the next step S360 is to decrypt said media database. Note that this may be performed concurrently with or consecutively to steps S320-S340. The operator of the computing device will require the password used to encrypt the media database. This may be received from the VMS operator who originally generated the video surveillance data package at the VMS.

The digital signature of the media database is validated. The validation may follow the same steps as above then compare the result. Preferably, the private key and public key pair used to create the digital signature of the media database are different to those of the video surveillance data package.

The authenticity determination in S350 may also be based on the result of validating the media database digital signature. It may also be used as a factor in determining the confidence level.

In some embodiments, the computing device 20 may request the audit logs S370 associated with the video surveillance data package. The secure repository will communicate a copy of the audit logs to the computing device 20 upon request. In some embodiments, the client on the computing device will be able to access the audit logs. The audit logs may be displayed on the display of the computing device 20 to allow interested parties to view the audit logs.

The received data packages comprise information data tables containing information. The information within the received information data tables may be validated. That process of validating the information within the information data tables comprises comparing the received information data tables to the information data tables stored in the secure repository. The computing device 20 may send a copy of or a request related to the information data table provided with the received video surveillance data package to the secure repository 18. The secure repository 18 will compare the stored information data table to provide a validation result. In other embodiments, the computing device 20 will have received a repository data package which comprises the information data table of the video surveillance data package generated by the VMS 12, in such cases the computing device may compare the information in the information data tables.

In the first embodiment, a copy of the hash value calculated by the VMS may be provided on the portable computer-readable storage medium. This received hash value may be known as the third hash value. This third hash value may be compared with the first **hash value** calculated by the computing device and the second hash value stored in or calculated by the secure repository.

While the system and methods provide a means to automatically authenticate the media data in the video surveillance data package, a person wishing to delve into the detail to perform their own analysis is able to. This is especially the case since everything is available to the computing device operator, or any other third party who wishes to view the video surveillance data package on the secure repository. For example, the information data tables, validations performed by the secure repository, VMS identity information, VMS user information, secure repository identity information, etc, are all accessible and viewable by the computing device 20 which allows the computing device operators to interrogate and analyse this information themselves.

In some embodiments, the secure repository 18 has performed validations during upload of the video surveillance data package to the secure repository 18. In any embodiment, these may be provided or accessible, this would allow comparison by the computing device, and/or analysis by the computing device operator.

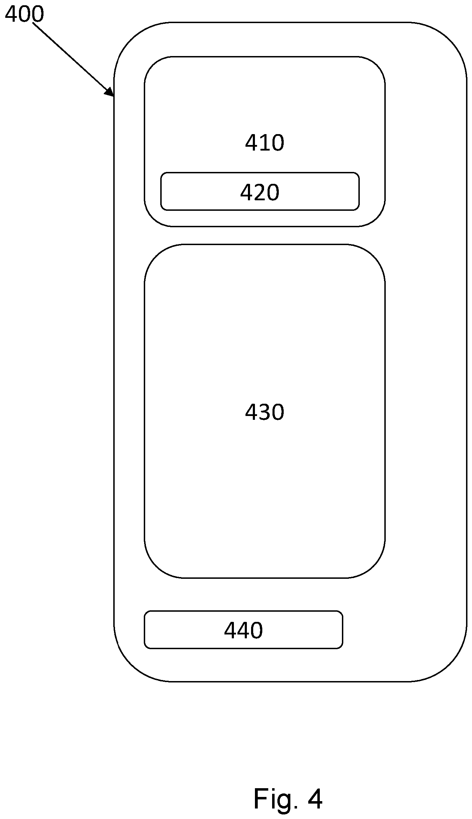

Referring to Fig. 4, a conceptual representation of a video surveillance data package is generally indicated at 400. The embodiment shown and described is a complete video surveillance data package generated by the video management system. However, as described above, a partial video surveillance data package may be provided to the secure repository, in such cases the conceptual representation is the same, but without the media data and media database digital signature.

A first section of the video surveillance data package 400 comprises a media database 410 and a media database digital signature 420. A second section of the video surveillance data package comprises one or more information data tables 430. A third section of the video surveillance data package comprises a video surveillance data package digital signature 440.

The one or more information data tables may comprise at least one of the following:
- VMS information
   o VMS site information:
      ▪ SLC#
      ▪ Site ID
      ▪ Public IP
      ▪ VMS operator ID
- Per sequence in export:
   o Source name (such as video camera name)
   o Timespan of recording
- Management server information
   o Local IP
   o Host name
   o Domain/Workgroup
- Time info:
   o Time export started
   o Time upload to secure repository started
- VMS Digital certificate
   o Public key

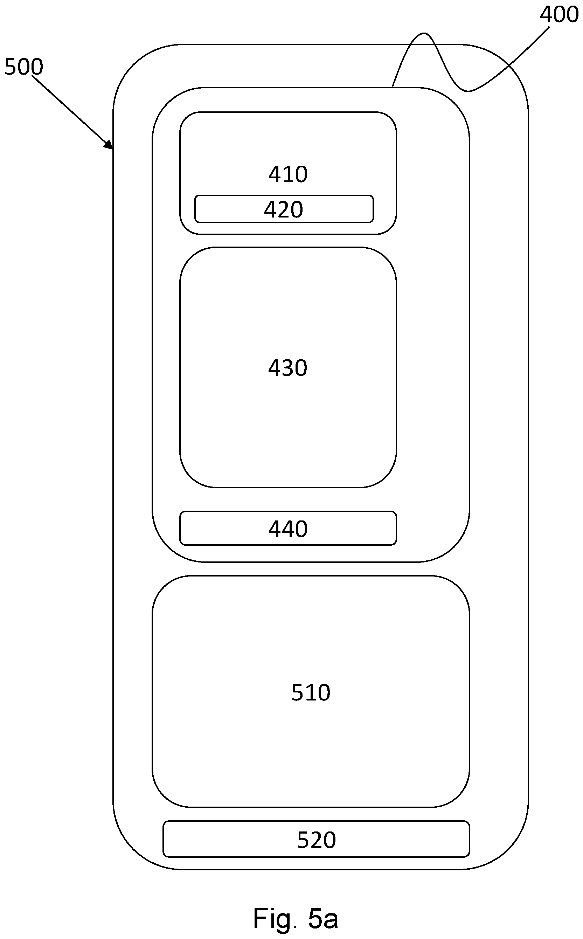

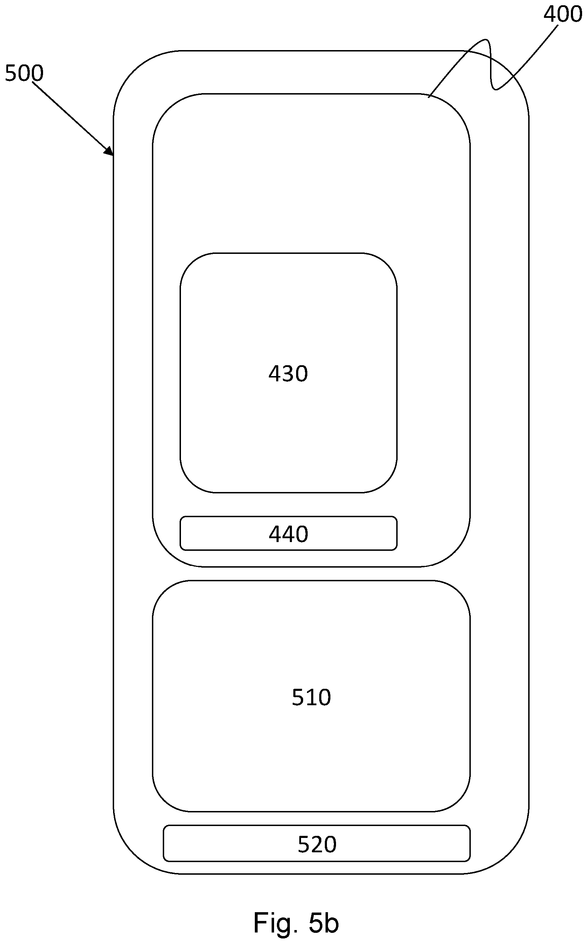

Referring to Figs. 5a and 5b, a schematic conceptual representation of a first and a second repository data package is generally indicated at 500. The repository data package in Fig. 5a includes media data and as such comprises the complete video surveillance data package. The repository data package in Fig. 5b does not include media data and as such comprises the partial video surveillance data package.

A first section of the repository data package 500 comprises the video surveillance data package 400, either with the media database 410 and digital signature 420 as in Fig. 5a or without the media database 410 and digital signature 420 as in Fig. 5b. A second section of the repository data package 500 comprises one or more information data tables 510. A third section of the repository data package 500 comprises a repository data package digital signature 510.

The one or more information data tables may comprise at least one of the following:
- Secure repository information
   o ID#
   o Name & physical address
   o IP address
   o Contact details
- Time information
   o Video surveillance data package upload time as recorded by the secure repository
   o Video surveillance data package completion time as recorded by the secure repository
- VMS registration information
   o Date VMS was registered
   o Public IP
- Validation information
   o Validation of video surveillance data package digital signature
   o Validation of media database digital signature
   o ID matching
   o IP matching
   o time information

The data packages shown and discussed in reference to Fig. 4, Figs. 5a and 5b may be the data packages in one or all of the embodiments discussed above.

While the disclosure has been illustrated and described in detail in the drawings and foregoing description, such illustration and description are to be considered illustrative or exemplary and not restrictive, the disclosure being not restricted to the disclosed embodiment(s). Other variations on the disclosed embodiment can be understood and performed by those skilled in the art, in carrying out the claimed disclosure, from a study of the drawings, the disclosure and the appended claims. Such variations may derive, in particular, from combining individual features or elements of the embodiments as set out above and/or in the appended claims.

All of the features disclosed in this, and/or all of the steps of any method or process so disclosed, may be combined in any combination, except combinations where at least some of such features and/or steps are mutually exclusive. Each feature disclosed in this specification may be replaced by alternative features serving the same, equivalent or similar purpose, unless expressly stated otherwise. Thus, unless expressly stated otherwise, each feature disclosed is one example only of a generic series of equivalent or similar features.

In the preceding embodiments, the functions described may be implemented in hardware, software, firmware, or any combination thereof. If implemented in software, the functions may be stored on or transmitted over, as one or more instructions or code, a computer-readable medium and executed by a hardware-based processing unit.

Computer-readable media may include computer-readable storage media, which corresponds to a tangible medium such as data storage media, or communication media including any medium that facilitates transfer of a computer program from one place to another, e.g., according to a communication protocol. In this manner, computer-readable media generally may correspond to (1) tangible computer-readable storage media which is non-transitory or (2) a communication medium such as a signal or carrier wave. Data storage media may be any available media that can be accessed by one or more computers or one or more processors to retrieve instructions, code and/or data structures for implementation of the techniques described in this disclosure. A computer program product may include a computer-readable medium.

By way of example, and not limitation, such computer-readable storage media can comprise RAM, ROM, EEPROM, CD-ROM or other optical disk storage, magnetic disk storage, or other magnetic storage devices, flash memory, or any other medium that can be used to store desired program code in the form of instructions or data structures and that can be accessed by a computer. Also, any connection is properly termed a computer-readable medium. For example, if instructions are transmitted from a website, server, or other remote source using a coaxial cable, fibre optic cable, twisted pair, digital subscriber line (DSL), or wireless technologies such as infrared, radio, and microwave, then the coaxial cable, fibre optic cable, twisted pair, DSL, or wireless technologies such as infrared, radio, and microwave may be included in the definition of medium. It should be understood, however, that computer-readable storage media and data storage media do not include connections, carrier waves, signals, or other transient media, but are instead directed to non-transient, tangible storage media. Disk and disc, as used herein, includes compact disc (CD), laser disc, optical disc, digital versatile disc (DVD), floppy disk and Blu-ray disc, where disks usually reproduce data magnetically, while discs reproduce data optically with lasers. Combinations of the above should also be included within the scope of computer-readable media.

The embodiments described above are provided by way of example only, and various changes and modification will be apparent to persons skilled in the art without departing from the scope of the present invention as defined by the appended claims.

The following description is provided to assist in understanding the teachings disclosed herein and will focus on specific implementations and embodiments of the teachings. This focus is provided to assist in describing the teachings and should not be interpreted as a limitation on the scope or applicability of the teachings.

As used herein, the terms "comprises," "comprising," "includes," "including," "has," "having" or any other variation thereof, are intended to cover a non-exclusive inclusion. For example, a process, method, article, or apparatus that comprises a list of features is not necessarily limited only to those features but may include other features not expressly listed or inherent to such process, method, article, or apparatus.

As used herein, and unless expressly stated to the contrary, "or" refers to an inclusive- or and not to an exclusive-or. For example, a condition A or B is satisfied by any one of the following: A is true (or present) and B is false (or not present), A is false (or not present) and B is true (or present), and both A and B are true (or present).

Also, the use of "a" or "an" are employed to describe elements and components described herein. This is done merely for convenience and to give a general sense of the scope of the invention. This description should be read to include one or at least one and the singular also includes the plural unless it is obvious that it is meant otherwise.

## Claims

1. A method of authenticating a video surveillance data package (300) from a video management system (VMS) of a video surveillance system, the method comprising the steps of:
a) receiving (S310), by a computing device, a video surveillance data package generated by the video management system in a location remote to the computing device, wherein the video surveillance data package comprises media data from the video management system, an information data table, and a first digital signature applied to the video surveillance data package by the video management system;
b) calculating (S320), by the computing device, a first hash value for the video surveillance data package received by the computing device;
c) comparing (S330) the first hash value of the received video surveillance data package to a second hash value, wherein the second hash value is provided by a secure repository, the secure remote repository storing a video surveillance data package received from the video management system upon completion of the process of generating the video surveillance data package prior to step a), the video surveillance data package stored with the secure remote repository comprising at least an information data table and a first digital signature applied to the video surveillance data package by the video management system;
d) validating (S340) the first digital signature of the video surveillance data package received by the computing device; and
e) determining (S350) that the video surveillance data package received by the computing device is authentic based on both step c) and step d) indicating that the video surveillance data package received by the computing device is an unmodified version of the video surveillance data package generated by the video management system prior to step a).

2. A method of authenticating a video surveillance data package (300) as claimed in claim 1, wherein the video surveillance data package received by the computing device comprises an encrypted media database and a second digital signature applied to the encrypted media database, wherein the encrypted media database includes the media data from the video management system.

3. A method of authenticating a video surveillance data package (300) as claimed in claim 2, further comprising the steps of:
f) decrypting (S360) the received encrypted media database, and
g) validating the second digital signature of the received encrypted media database; wherein step e) is further based on step g).

4. A method of authenticating a video surveillance data package (300) as claimed in any one of the preceding claims, further comprising the step of h) receiving (S370), by the computing device, an audit log from the secure repository, the audit log comprising a record of at least one of the following upload information, download information, viewing information and interaction information.

5. A method of authenticating a video surveillance data package (300) as claimed in any one of the preceding claims, further comprising the step of
providing a portable computer-readable storage medium, wherein the portable computer-readable storage medium comprises the video surveillance data package generated by the video management system, and wherein step a) comprises accessing, by the computing device, the portable computer-readable storage medium,
wherein a third hash value calculated by the video management system is provided with the video surveillance data package stored on the computer-readable storage medium, and wherein step c) comprises comparing the first hash value, second hash value and third hash value.

6. A method of authenticating a video surveillance data package (300) as claimed in any one of the preceding claims, wherein the step of determining that the video surveillance data package received by the computing device is authentic comprises determining an authenticity confidence level based on validating step(s) and comparing step(s).

7. A method of authenticating a video surveillance data package (300) as claimed in any one of the preceding claims, further comprising the steps of:
generating, by the secure repository, a secure repository data package, wherein the secure repository data package comprises the video surveillance data package received from the video management system and a digital signature applied by the secure repository; and
validating the secure repository data package.

8. A method of authenticating a video surveillance data package (300) as claimed in any one of the preceding claims, wherein step a) comprises transmitting, from the secure repository to the computing device, the video surveillance data package stored in the secure repository, wherein the video surveillance data package stored in the secure repository further comprises media data from the video management system.

9. A system for authenticating a surveillance data package, the system comprising:
a computing device including a processor, memory and communication interface; and
a secure repository including a processor, memory and communication interface, the secure repository being located remotely to the computing device and selectively in communication with the computing device through the respective communication interfaces;
wherein the computing device comprises a computer program which, when run on the processor of the computing device, is configured to cause the computing device to:
a) receive (S310) a video surveillance data package generated by a video management system in a location remote to the computing device, wherein the video surveillance data package comprises media data from the video management system, an information data table, and a first digital signature of the video surveillance data package, wherein the first digital signature of the video surveillance data package is applied by the video management system;
b) calculate (S320) a first hash value of the received video surveillance data package;
c) compare (S330) the first hash value of the received video surveillance data package to a second hash value, wherein the second hash value is provided by a secure repository, the secure remote repository storing a video surveillance data package received from the video management system upon completion of a process of generating the video surveillance data package prior to a), the video surveillance data package stored with the secure remote repository comprising at least an information data table and a first digital signature applied to the video surveillance data package by the video management system;
d) validate (S340) the first digital signature of the video surveillance data package received by the computing device; and
e) determine (S350) that the video surveillance data package received by the computing device is authentic based on both c) and d) indicating that the video surveillance data package received by the computing device is an unmodified version of the video surveillance data package generated by the video management system prior to a).

10. A method of generating a video surveillance data package (200) from a video management system for use in an authentication process using a computing device remote to the video management system, the method comprising the steps of:
a) establishing (S220) a connection between a video surveillance management system and a secure repository through communication interfaces in the video surveillance management system and secure repository;
b) determining (S230), at the video management system, media data to be exported;
c) collecting (S240), by the video management system, information for an information data table;
d) generating (S250), by the video management system, a video surveillance data package based on the determined media data and the information data table;
e) applying (S260), by the video management system, a first digital signature to the generated video surveillance data package;
f) transmitting (S280) a video surveillance data package comprising at least the information data table and the first digital signature; and
g) storing, by the secure repository, the transmitted video surveillance data package for access by a computing device remote to the secure repository during a process of authenticating a video surveillance data package received by the computing device.

11. A method of generating a video surveillance data package (200) as claimed in claim 10, wherein the video management system comprises a secure export package server and an authorisation server, wherein the video surveillance data package is generated as a protected resource in the secure export package server and the authorisation server controls access by the video management system to the protected resource and allows transmission to the secure repository.

12. A method of generating a video surveillance data package (200) as claimed in claim 10 or claim 11, further comprising the steps of:
Registering (S210) the video management system with the secure repository prior to generating the video surveillance data package, wherein the step of registration comprises validating the identity of the video management system and generating a single-use secure key, wherein the secure repository stores registration information including at least some information identifying the video management system; and
Validating (S290), by the secure repository, the received copy of the video surveillance data package based on the information data table and the registration information.

13. A method of generating a video surveillance data package (200) as claimed in any one of claims 10 to 12, further comprising the step of
generating, by the secure repository, a secure repository data package, wherein the secure repository data package comprises the video surveillance data package stored with the secure repository, a repository information data table, and a third digital signature applied to the secure repository data package.

14. A method of generating a video surveillance data package (200) as claimed in any one of claims 10 to 13, further comprising the steps of:
Generating (S270), by the video management system, a hash value based on the generated video surveillance data package;
transmitting the hash value to the secure repository, the hash value being transmitted from the video management system through the communication interfaces to the secure repository; and
storing, by the secure repository, the hash value for use during a process of authenticating a video surveillance data package received by the computing device.
